(19) Europäisches Patentamt / European Patent Office / Office européen des brevets

(11) **EP 4 332 869 A1**

# EUROPEAN PATENT APPLICATION

published in accordance with Art. 153(4) EPC

(43) Date of publication:
**06.03.2024   Bulletin 2024/10**

(21) Application number: **21939369.1**

(22) Date of filing: **09.07.2021**

(51) International Patent Classification (IPC):
**G06Q 30/08** (2012.01)

(52) Cooperative Patent Classification (CPC):
**G06Q 30/08; G06Q 50/10;** Y02P 90/30

(86) International application number:
**PCT/JP2021/026020**

(87) International publication number:
**WO 2022/230213 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **27.04.2021   JP 2021075325**

(71) Applicant: **Umeda, Shigeto
Tokyo, 112-0006 (JP)**

(72) Inventor: **Umeda, Shigeto
Tokyo, 112-0006 (JP)**

(74) Representative: **Staeger & Sperling
Partnerschaftsgesellschaft mbB
Sonnenstraße 19
80331 München (DE)**

(54) **ESCROW-TYPE SCHEDULE BOOKING SYSTEM AND SOCIAL EVALUATION SYSTEM THEREFOR**

(57)   Provided is a booking system capable of determining individual booking details, in real time, on every occasion, through a pledge (a PPP message: a promise) within a platform, simply with indication of a minimum condition, namely being at a designated address at a designated time. In this booking system, a booker terminal 10 of a booker included in the users, a cast terminal 20 of a cast included in the users, and a booking system 40 for booking can communicate through a network 30. The booking system 40 comprises: a request information storage unit that receives and stores service request information for receiving a service from the booker terminal 10; booking processing units (51, 52) for booking the booker terminal 10 and the cast terminal 20; a contract information storage unit that stores mutual messages from the cast terminal 40 and the booker terminal 10 as booker-cast contract information; and a disclosure unit for disclosing the booker-cast contract information which is stored in the contract information storage unit.

FIG.1

EP 4 332 869 A1

## Description

[Technical Field]

The present invention relates to a booking system.

[Background]

Conventionally, with the increase of matching services, a user of a booking system at a job-offering site or job-seeking site is matched online with an employment recruiter such as at a company, where the majority of the users are hourly wage (time charge) workers in which the job applicant individually contract with an employment recruiter. Namely, those are people having a preference for working type such as freelance, part-time or casual work.

Such people often seek job by doing internet search etc. to use crowd sourcing or job matching services, and individually make a job contract.

However, the concept itself of the present crowd sourcing/job matching services in general is still stuck in the concept of a consignment business.

In other words, in a consignment business deliverables are guaranteed, and a payment is made in compensation, which is risky compared to a working type to provide labor on time charge basis using resources such as individual skills, experience and time.

Moreover, in so-called social media such as Instagram (registered tradename) and Facebook (registered tradename), although many users want commercial transactions, in the current situation, it is difficult to successfully execute transactions, because there are liability issues both in contractor and contractee. In order to facilitate the transactions to be executed, it is necessary to establish a system, where a third party role such as a notary regarding a negotiation is assumed like the present invention, at the same time, a time charge compensation in escrow is made, and the trust of a user on social media (on a platform) can be actually secured, and such system is required to be developed into a highly transparent and useful system.

The service at "coconala Inc." is known as a skill market where expertise such as one's "knowledge, skill and experience" is available online for buying and selling (NPL 1). In the coconala service, there are sellers who sell one's individual skill and experience as a "service", and buyers who buy the "skill and experience" sold by the seller. For example, a buyer of a service can make search and comparison from not less than 200 kinds of services to buy desired services. At an actual shopping, the "buyer" of a service logs into the coconala service site, and initially sends requests and inquiries as a direct message to a "seller" of the service. Then, the "buyer" and the "seller" make negotiations such as confirming the inquiry details, acceptance or non-acceptance of the inquiries, and service fees, etc. After the negotiation, if the buyer buys the service, matters such as the inquiry details and the delivery date are confirmed in a "talk room" of the seller of the service bought so as to actually execute transaction. All transactions are restricted to interactions within the coconala, and it is strictly prohibited for the buyer and seller to directly meet outside due to the high commission fees. Accordingly, the service is not available in sites other than the coconala, such as Zoom meetings and thus is limited and less convenient.

PTL 1 discloses an information processing device, an information processing method, and an information processing program, in which a user can easily determine the skill of a skill provider in an electronic commercial transactions system where a skill provider sells his/her skills via the internet. In the invention of this PTL 1, upon the request from a user terminal, a server transmits skill guide contents including the skills provided by the skill provider, pre-work information and post-work information to a user terminal. Then, based on the pre-work information and post-work information, the server evaluates the skill of the skill provider, and transmits this to the user.

Moreover, JP 2020-091685 A is mentioned as related patent literature (PTL 2).

[Citation List]

[Patent Literature]

[PTL 1] JP 2020-091684 A
[PTL 2] JP 2020-091685 A

[Non Patent Literature]

[NPL 1] coconala Inc. "coconala - selling and buying everybody's expertise, a free market of skills", [online], [searched on April 5, 2021], internet <URL:https://coconala.com/>

[Summary of Invention]

[Technical Problem]

In NPL 1 and PTL 1, however, many message are exchanged between the buyer and seller, and thus the services were unsuitable for a niche service in a short time (e.g., 10 minutes, 20 minutes, 30 minutes etc.). For example, if a service buyer (payer) wants to learn English and look for someone available to teach English for utilizing one's spare time of 30 minutes from 13:00 to 13:30 tomorrow, the problem is that the service is not usable from the payer's standpoint.
Moreover, there were problems with the conventional service in that the service fees are calculated based on expertise of the service provider to secure the service content, which is a so-called platform for professionals, thus there is a high barrier for freelancers, part-time and casual workers etc., who normally work with a sense of an hourly wage, to participate as a consignee (cast). Also from the consignee (cast)'s standpoint, it was difficult to earn in one's little spare time.
Further, when a compensation for a service is paid later, the consignee bears a risk because there is not necessarily a secured guarantee that the payer will pay. Meanwhile, the payer side bears a risk if a service is not worth paying a compensation.
Furthermore, there are not a few troubles caused by emotional conflicts between the payer and consignee through the so-called social evaluation system, e.g. word-of-mouth etc.
The escrow type schedule booking according to the present invention is a time charge only for a booked schedule and does not involve the guarantee for a delivery of service. The payment is made in advance when the condition is fixed, and is received at the service completion, thus the aforementioned risk both for the payer and consignee is avoidable. Here, "escrow" comes into force as a certificate when money and certificates are entrusted to a third party, and certain conditions are fulfilled.
Moreover, if adopting the social evaluation system according to the present invention such as disclosing details of deals to other users, negotiations are conducted on the assumption that the deals are accessible by the third party, , which can obviate troubles causable due to emotional conflicts between the payer and consignee.
The objective of the present invention is to solve the aforementioned conventional problem to provide a schedule booking system based on an escrow type time charge which is capable of determining individual booking details, for each booking, through the In Platform Public-able Promise = pledge within a platform (hereinunder PPP), only by indicating a designated time at a designated address, and to provide a new evaluation economy to replace the conventional word-of-mouth and reviews often including factually inaccurate contents.
Moreover, a further objective of the present invention is to provide a system in which a booking transaction is available on one's disposal by booking the time of someone new at any time while referring to disclosed booking evaluations, with making payment by setting the amount freely.

[Solution to Problem]

The present invention takes the aforementioned problem into consideration, where the invention according to claim 1 is a booking system in which a booker terminal of a booker included in users, a cast terminal of a cast included in the users, and a booking site for booking can communicate through a network, in which said booking site comprises a request information storage unit that receives and stores service request information for receiving service from the booker terminal, a booking processing unit for booking the booker terminal and the cast terminal, a contract information storage unit that stores mutual messages from the cast terminal and the booker terminal as booker-cast contract information, and a disclosure unit for disclosing the booker-cast contract information which is stored in the contract information storage unit.
The invention according to claim 2 is the booking system according to claim 1 in which the mutual messages are allowed to be posted only alternatingly.
The invention according to claim 3 is the booking system according to claim 1 or claim 2 in which a service settlement unit is included for calculating service points to be in a state of provisional payment based on cast information, and for sending the service points to a settlement institution as billing information after completion of the service.
The invention according to claim 4 is the booking system according to any one of claims 1 to 3 in which a position grasping unit is included for grasping actions and positions by GPS from before-start to finish of a booking when the booking is made offline in the booker terminal and the cast terminal, and the booker terminal and the cast terminal display a photograph icon and send a photographic image from a camera to said booking site by selecting the photograph icon.
The invention according to claim 5 is the booking system according to any one of claims 1 to 4 in which a search result of the cast terminals is displayed in AI matching order, and the booker terminals and the cast terminals are AI-matched.

The invention according to claim 6 is the booking system according to any one of claims 1 to 5 in which the booking site calculates information for making decision including which offer is the highest in profitability, at an approval consideration stage, when there are overlapping offers to the cast terminals.

[Advantageous Effects of Invention]

According to the aforementioned present invention, achievable is a booking system capable of determining individual booking details, in real time, on every occasion, through a PPP (In Platform Public-able Promise = a pledge within a platform), only by indicating a minimum condition, namely being at a designated address at a designated time.

Thereby, the evocation of the supply side defined in the ribbon model of a matching service is low in the social media level, and in a sense, a user's time can be in inventory at the point of collection (registration) of users.

[Brief Description of Drawings]

The drawings illustrate specific embodiments of the present invention according to the present disclosure, and include not only the essential configuration of the invention, but also optional and preferred embodiments.

[Fig. 1] is a schematic function block diagram of the booking system of the present embodiment.

[Fig. 2] is a schematic block diagram of a network connection system between a booker (payer) terminal, a cast (consignee) terminal, and a booking system, to which the present invention was applied.

[Fig. 3] is a conceptual diagram of the booking system of the present embodiment.

[Fig. 4] is a drawing illustrating one example of a booker (payer) and a cast (consignee) of the booking system of the present embodiment.

[Fig. 5] is a booking process flowchart between a booker (payer) terminal and a cast (consignee) terminal mediated by the booking system of the present embodiment.

[Fig. 6] is an explanatory drawing of the control of the alternating message interactions between a booker (payer) terminal and a cast (consignee) terminal, the disclosure/non-disclosure of message, and cancellation processing of the present embodiment.

[Fig. 7] is an explanatory drawing of a booking between a booker terminal and a cast terminal of the present embodiment.

[Fig. 8] is an explanatory drawing of a screen which displays a calendar of the present embodiment.

[Fig. 9] is a drawing illustrating an example of a confirmation screen when posting a booking offer in the booking system of the present embodiment.

[Fig. 10] is an explanatory drawing explaining a screen which displays a PPP message of the present embodiment.

[Fig. 11] is a drawing illustrating an example of a confirmation screen of a cast terminal when posting a reply to a booking offer of the present embodiment.

[Fig. 12] is an explanatory drawing of a booking start screen of the present embodiment.

[Fig. 13] is an explanatory drawing of a booking end screen of the present embodiment.

[Fig. 14] is a drawing illustrating an example of a profile screen in the booking system of the present embodiment.

[Fig. 15] is a drawing illustrating a case example of currently disclosed bookings in the profile screen of the booking system of the present embodiment.

[Fig. 16] is a drawing illustrating a user interface in the booking system of the present embodiment.

[Fig. 17] is a drawing illustrating a user interface in the booking system of the present embodiment.

[Fig. 18] is a drawing illustrating a user interface in the booking system of the present embodiment.

[Fig. 19] is a drawing illustrating a user interface in the booking system of the present embodiment.

[Description of Embodiments]

[First embodiment]

The embodiments are explained in detail below with reference to the appended drawings.

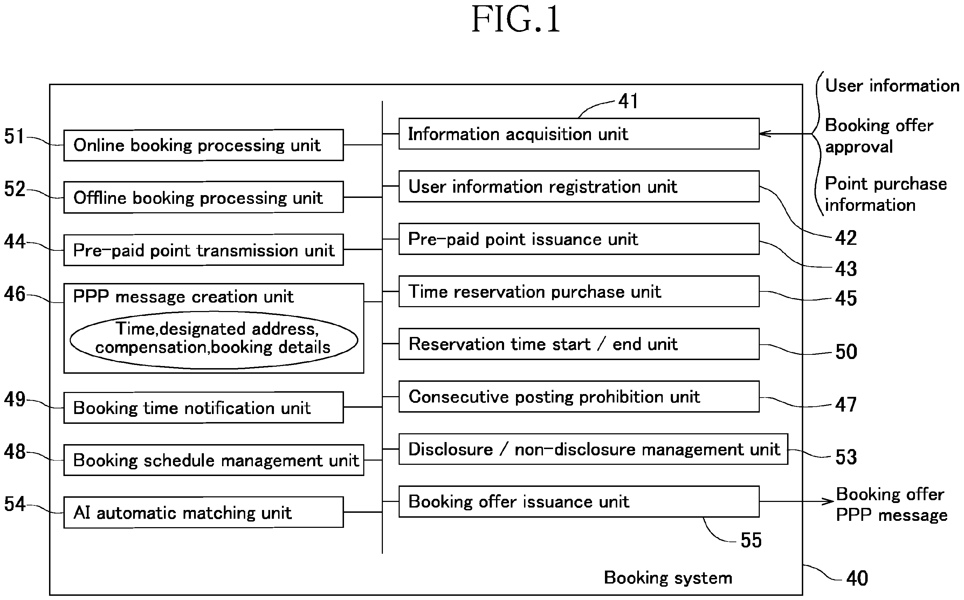

Fig. 1 is a function block diagram of the booking system of the present embodiment. In the present embodiment below, the booking system according to the present invention may also be collectively referred to as BookYou (product name).

The booking system of the present embodiment is a platform type system which can create an escrow-paid booking for a schedule, with contents (booker-cast contract information) promised by the alternating message interactions between a booker (payer) terminal and a cast (consignee) terminal, within specified XX characters (e.g., 200 characters). This booker-cast contract information means a PPP (In Platform Public-able Promise = pledge within a platform), and may also simply be referred to as a promise. This platform type system provides a dedicated messenger (messaging application) for negotiation of a booking which discloses PPP being a pledge within a platform. In this messenger, the mutual negotiation details are always alternatingly and time sequentially recorded, so as to be easily seen by a third party. This dedicated messaging application for negotiation may be installed and used on a PC (including a tablet PC, a laptop PC, or a desktop PC) or a smartphone.

Here, the booker-cast contract information uses a PPP message within a specified number of characters. However, a live video or a voice message within a specified number of seconds may also be used. For example, a video or voice message within seven seconds may also be used in place of a PPP message by on-the-spot recording. The number of seconds for recording is not restricted to seven seconds, but may be a period of time to enable recording (video recording) of the promise constituting the booking.

As illustrated in Fig. 1, the booking system of the present embodiment includes: an information acquisition unit 41; a user information registration unit 42; a pre-paid points issuance unit 43; a pre-paid points transmission unit 44; a time (inventory) reservation purchase unit 45; a PPP message creation unit 46; a consecutive posting prohibition unit 47; a booking schedule management unit 48; a booking time notification unit 49; a reservation time start/end unit 50; an online booking processing unit 51; an offline booking processing unit 52; a disclosure/non-disclosure management unit 53; an AI automatic matching unit 54; and a booking offer issuance unit 55. This booking system constitutes a booking site configured to be connected to a network 30.

The "information acquisition unit" 41 acquires information such as user information, booking offer approval information, and point purchase information.

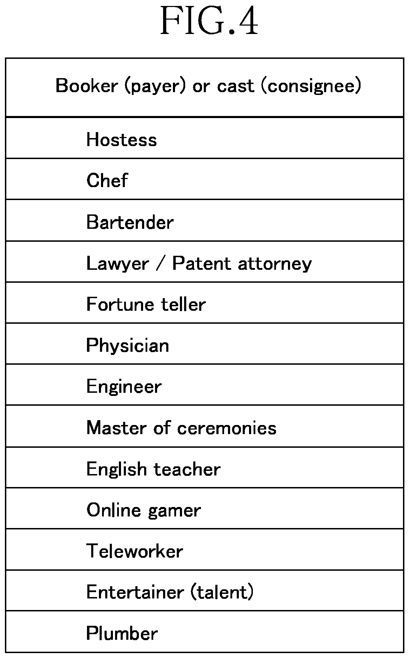

In the "user information registration unit" 42, registration takes place via a user terminal, where the user can be a booker (payer) or a cast (consignee). The booker (payer) or cast (consignee) is, as illustrated in Fig. 4 for example, a hostess, a chef, a bartender, a lawyer, a patent attorney, a fortune teller, a physician, an engineer, a master of ceremonies, an English teacher, an online gamer, a teleworker, an entertainer (talent), or a plumber. If these persons are bookers (payers), they can request an online booking or an offline booking. If they are casts (consignees), they can be consigned with an online booking or an offline booking in accordance with the booker's request. The user may also give a ranking to display a list or a score, in accordance with the number of payments or consignments. Moreover, the user may also display a rank such as gold, silver or regular on a booker display screen or a cast display screen.

The "pre-paid points issuance unit" 43 issues pre-paid points in accordance with a prepayment purchase request from a user terminal.

The "pre-paid points transmission unit" 44 sends pre-paid points issued by the pre-paid points issuance unit 43 to a booker terminal or a cast terminal which is a user terminal of which there was a purchase request. The booker terminal or the cast terminal receives the pre-paid points sent from the booking system.

The "time reservation purchase unit" 45 issues a booking request from the booker terminal, and processes a time purchase upon receipt of the time reservation purchase. The time purchase processing conducts a schedule reservation processing of a cast terminal which matched search conditions, and waits for a reply from the cast terminal.

The "PPP message creation unit" 46 creates a PPP message. This PPP message provides a structure enabling solution to problems between users. Specifically, one PPP message has no more than 200 characters (one Japanese word is counted as two characters) and is specified as a dedicated messenger for negotiation called PPP which can only be posted alternatingly. The negotiation details are maintained in the message history as a promise, in chronological time sequence and in a format which is easily understood as seen from a third party (alternatingly within XX characters). The PPP messages serve as a substitute for a contract document.

The "consecutive posting prohibition unit" 47 prohibits two consecutive postings, where interactions are alternated between the booker terminal and the cast terminal. This is because if a consecutive posting is allowed, it would be like a spam e-mail. For the consecutive posting prohibition unit 47, a pattern of eliminating the portion referred to as alternating (namely pattern of allowing two or more consecutive postings) may be adopted depending on the case. For example, in an approval of a booking request, the booker and the cast can send a reply to the approval. This is not deemed as two consecutive postings. Once the cast approves, writing a reply is also allowable as long as it is not two consecutive postings.

There is a configuration such that a booker, through the booker terminal, pre-negotiates a booking with a cast terminal of the cast, and sends a booking offer after receiving confirmation with the cast. Booking pre-negotiation is not necessarily mandatory, and may also be omitted in cases where, e.g., the booker knows the cast. As a booking pre-negotiation message, the "time, address, booking details (no more than 200 characters; one Japanese word is counted as two characters)" are input and sent. As a booking offer, the "amount" is additionally input to the aforementioned details and sent. In order to send a booking offer, points are required, and thus points of the offer value or more are purchased. After a booking is approved, it cannot be cancelled from the booker's side. Free cancellation is possible from the booker's side only when the cast was late for the time. To the contrary, the cast may cancel at any time, but the number of cancellations after approval is always disclosed. Even though the booker is late, if the cast shows up, the booking starts and will automatically end when the time comes.

The "booking schedule management unit" 48 manages a booking schedule.

In the "booking time notification unit" 49, a notification is made at predetermined time before the booking start time. The predetermined time can be set at any time such as 5 minutes or 10 minutes before start.

The "reservation time start/end unit" 50 is a timer for measuring the start time and the end time of reservation time.

The "online booking processing unit" 51 performs an online booking process. The online booking starts at the point in time when the cast has logged into a video chat. Both the booker and the cast are present, and the online booking automatically ends when the booking end time comes. The points are transferred from the provisional payment state held by the booking system to the cast terminal of the cast.

The "offline booking processing unit" 52 confirms the location information of a cast terminal and check the start of an offline booking. The trigger for an offline booking to start is when the cast has tapped the start button on the designated address GPS of the cast terminal. At this time, the mutual terminals are preferably GPS mobiles, and GPS data is added and sent to the booking system. The booking system then associates the data with the booker-case contract information to be stored in memory.

The "disclosure/non-disclosure management unit" 53 manages the disclosure or non-disclosure of the messenger of the booking completed. The "disclosure/non-disclosure management unit" 53 also has a function of disclosing the booker-case contract information. The disclosure/non-disclosure management unit 53 discloses the messenger used in the booking negotiation after completion of the booking, upon booker's request (or setting) to disclose positive evaluations or negative evaluations to other users. The disclosure/non-disclosure management unit 53 can make a negative disclosure be non-disclosed at any time upon request of the booker, or a positive disclosure be non-disclosed at any time upon request of the cast. However, a messenger once made to be non-disclosed will be set so as to be unable to be disclosed again. A booking made from a disclosed state into a non-disclosed state will be counted in the completed bookings which remain non-disclosed. The biggest reason for this, amongst several reasons, is not to rehash problems solved between the parties of a booker and a cast. The booking system thus helps to resolve trouble. This is because in order to delete nastygrams on SNS, it takes considerably long term for the messages to be deleted from asking for deletion to an SNS administering group.

The configuration may be such that a cast whose message was disclosed by a booker may return any amount of points up to the points paid at the last booking, and can negotiate with the booker such as by stating "I'll return half the points if you close the booking case". The disclosure/non-disclosure management unit 53 is configured so that the message is automatically made to be non-disclosed and never again be disclosed if a cast returned the entire amount of points. The promises (PPP messages) are disclosable to other users of the booking system which assures transparency and sociability and is similar toto the idea of a "blockchain" in which a structure functions without complicating the management of the administration side (or administrative company). For example, if an illegal booking offer is made, the PPP cannot be disclosed, and also refunds cannot be expected.

The booking system providing such a structure enable users to easily solve problems, and platform commission fees can be lowered with the saved management cost.

The "AI automatic matching unit" 54 conducts a search to match users who are bookers (payer) or casts (consignee). Upon input of search condition, the AI automatic matching unit 54 conducts an AI automatic search, and displays casts which match the booking needs of the booker, in matching order (e.g., score order of matching). The search result includes the user information categorized by skill or occupation (business type) and can be used for search refinement. Moreover, since a minimum hourly wage is set for a booker and a cast, when a booker searches for a cast, only cast at or less than a compensation amount is searched. The reason for that is to provide matching that better suits the needs of the booker and the cast. Such configuration may be provided that a user sorts bookers with high sales volume to the user in a priority upper ranking. The system may be provided with means to automatically calculate materials for decision such as which offer is the highest in profitability, at an approval consideration stage when there are overlapping offers to a cast.

The "booking offer issuance unit" 55 issues a booking offer from the booker (payer) to the cast (consignee). There are two types of booking offers of online booking and offline booking. When the booker issues an offline booking offer, the booker is required to submit photo identification to the booking system. This one-time submission confirmation is effective for a fixed period of time. The reason for submitting identification is due to considering the safety to the cast. Once confirmed, safety is deemed to be secured in the fixed period of time, and the identification is acknowledged to be effective for a fixed period of time.

In addition, the online booking processing unit 51 or the offline booking processing unit 52 may also be configured so as to have a service settlement means to conduct actual settlement processing.

This actual settlement processing is a processing in which a service fee is calculated based on the service request time and time span included in the service request information, and the selected cast information, and in which predetermined expenses are deducted from or added to this service fee to be sent as billing information to the settlement institution included in the service request information from the booker terminal. The transfer is made to the cast's bank account, for example, via paypal, paypay, visa, master (registered tradename).

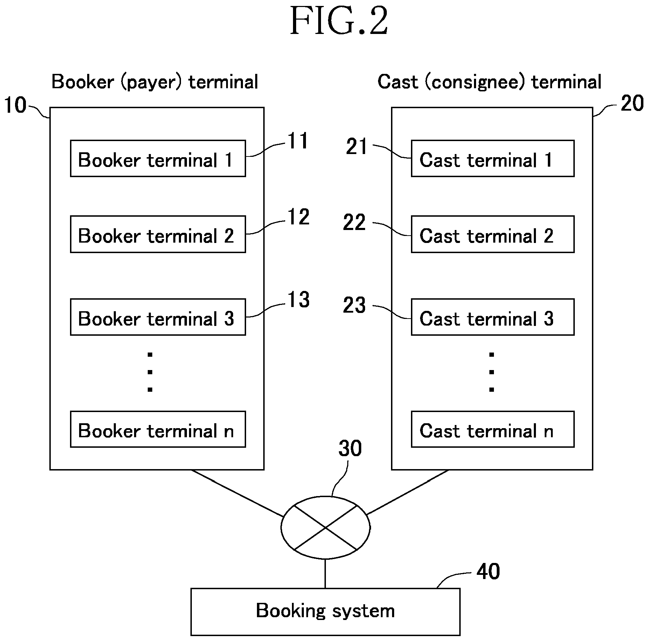

Fig. 2 is a schematic block diagram of a network connected system between a booker (payer) terminal, a cast (consignee) terminal, and a booking system, to which the present invention was applied.

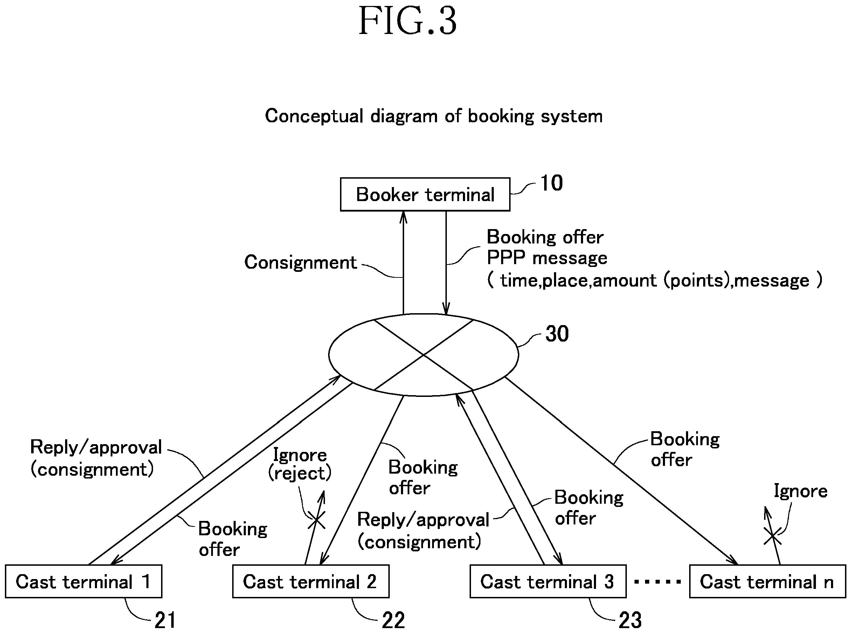

As illustrated in Fig. 2, in the booking system 40, the booker (payer) terminal 10 and the cast (consignee) terminal 20 are connected via a network 30 such as the internet or broadband, and each of the booker terminals 11, 12, 13 and the cast terminals 21, 22, 23 are respectively connectable to any terminal. The booking system 40 may be installed as a server configuration of an administrative company, or may also be installed on the cloud as a cloud server. Fig. 3 illustrates a conceptual diagram of the booking system of the present embodiment.

The concept (structure) of the booking system of the present embodiment is explained by using Fig. 2 and Fig. 3 below.

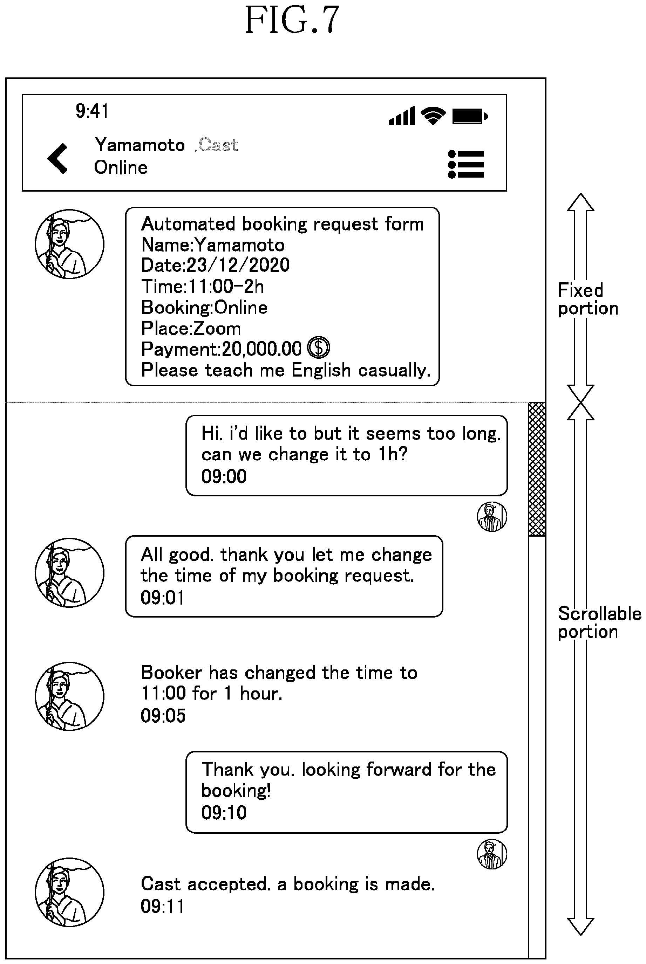

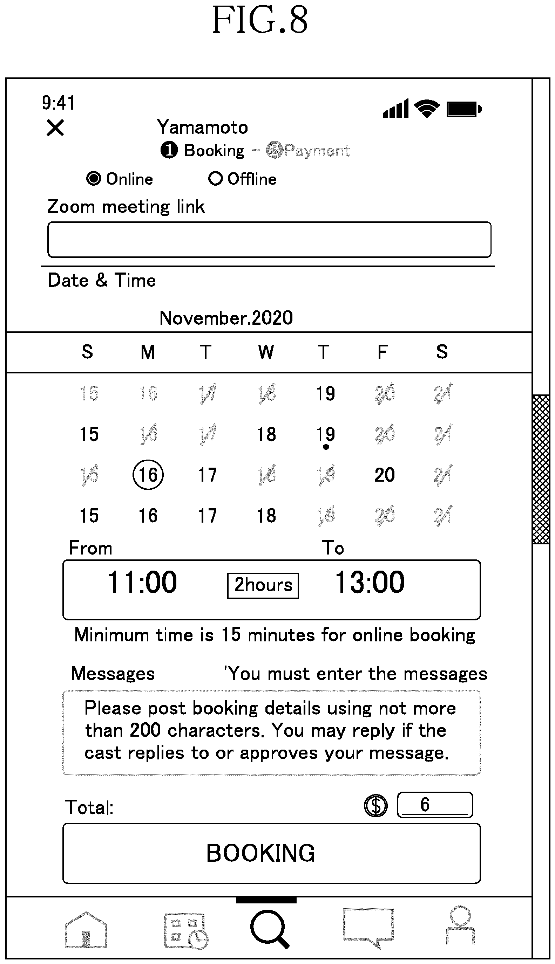

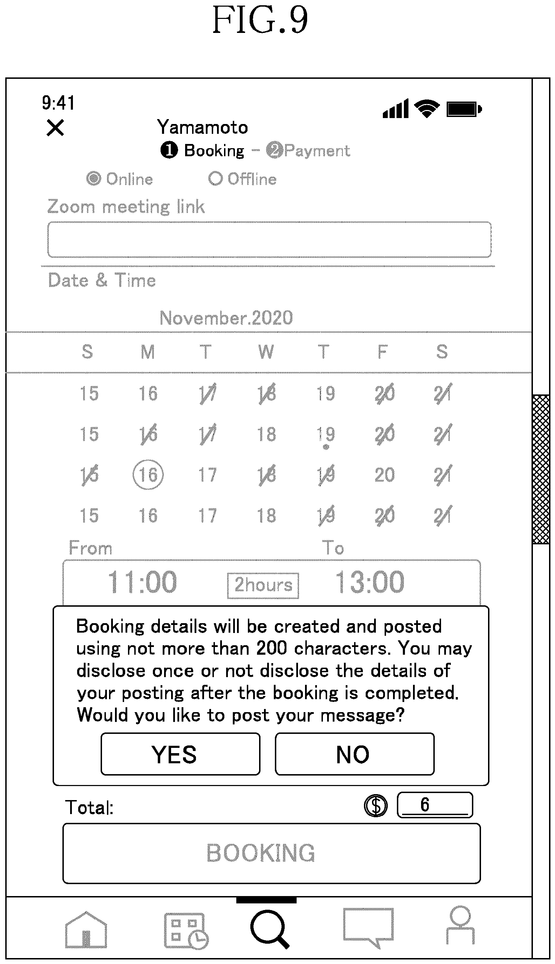

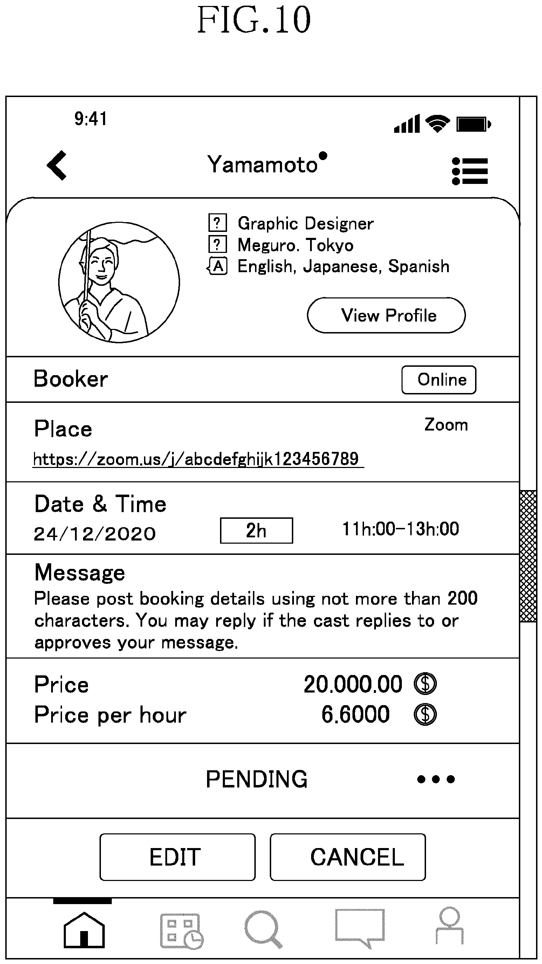

If a booker sends a booking offer as a PPP message from a booker terminal 10, a booking offer is sent via the network 30 to cast terminals 21, 22, 23 which match the desired conditions. An example of a booking offer is illustrated in Fig. 7. When sending a booking offer, a confirmation screen as shown in Fig. 8, or a confirmation screen of disclosure/non-disclosure of booking details as shown in Fig. 9 are displayed at the booker terminal. After posting a booking, the booking is in a pending (holding) state as shown in Fig. 10. In this state, the booking can be edited or cancelled. The PPP message includes the time, place (designated address), amount (points), and booking details. The PPP message may be a text message within a predetermined number of characters, or a video or voice message of a predetermined number of seconds.

When casts of cast terminals 21, 22 who received a booking offer send a reply/approval message, consignment is processed and the booking is established. The present example explains the case in which a booking is consigned by a reply/approval however, it may be controlled so that consignment is processed as long as an approval message is sent.

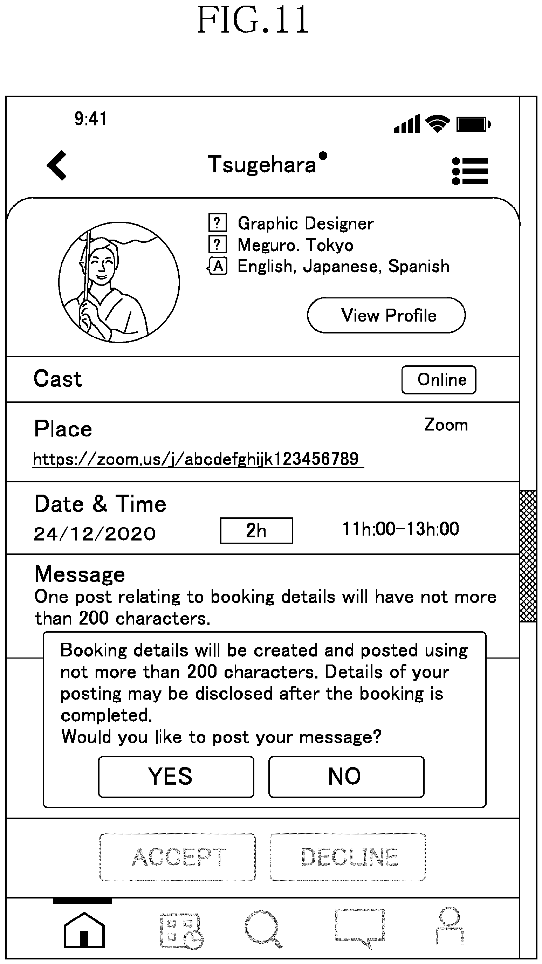

An example of a confirmation screen during the reply processing of a booking displayed on the cast terminal is illustrated in Fig. 11. After confirmation, when the cast presses the YES button as illustrated in Fig. 11, a message of reply/approval processing is sent. If a booking offer is ignored or rejected as the cast of the cast terminal 22 does, the booking is thereby not established and the processing ends. If a booking offer is simply ignored, the booking offer is managed so as to be maintained until the request time comes. In the present system, until a booking is approved, the cast side may reject, or the booker may withdraw the request, and thus the booking request is managed so as to be maintained as it is until either side takes action.

Moreover, in bookings, multiple booking offers can be issued.

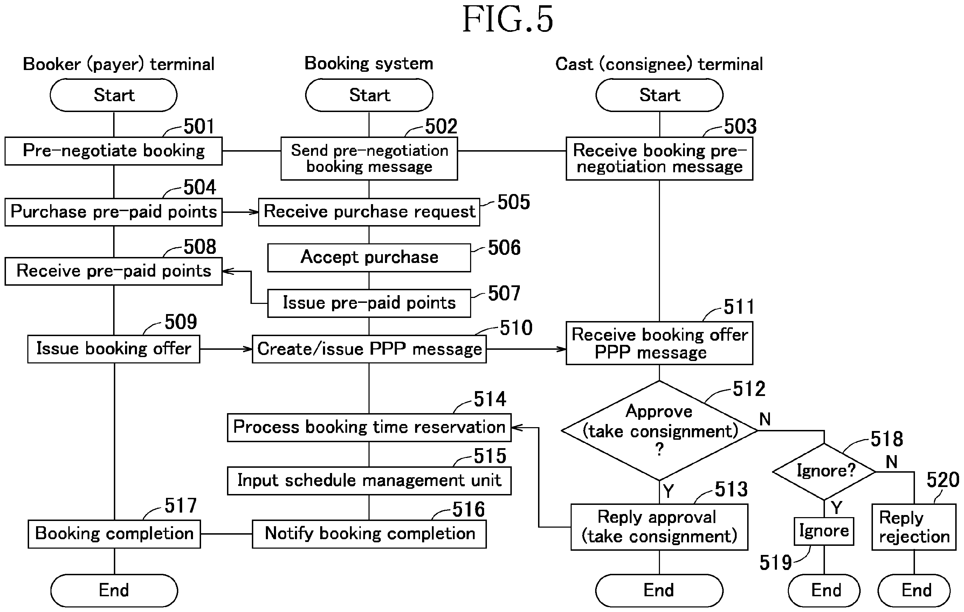

Fig. 5 is a booking process flowchart between a booker (payer) terminal and a cast (consignee) terminal via the booking system of the present embodiment.

The flow of the booking processing is explained below by referring to Fig. 5.

First, the booker can conduct a booking pre-negotiation from a booker terminal (step 501), and if a booking pre-negotiation message is issued from the booker terminal, the booking pre-negotiation message is sent via the booking system (step 502), and the cast terminal of the cast receives the booking pre-negotiation message (step 503). Through a sequence of the booking pre-negotiation, the booker can obtain information on the cast. The booking pre-negotiation can be omitted, and a booking offer can be sent directly to the cast terminal of the cast; however, when a booker contacts the cast beforehand to conduct pre-negotiation, the booker can confirm whether the cast is a better match with the booker's own wishes and then send out a booking offer. The time, designated address and booking details are sent as a booking pre-negotiation message. In the booking pre-negotiation, a message can be sent even if pre-paid points have not been purchased. However, when issuing a formal booking offer, it is necessary to purchase pre-paid points, or to have pre-paid points purchased beforehand.

Next, when pre-paid points purchase is processed from the booker terminal (step 504), purchase request information is received in the booking system (step 505), the purchase is accepted (step 506) and the pre-paid points are issued (step 507).

When the booker terminal receives the pre-paid points issued from the booking system (step 508), the booker terminal is ready for a booking offer.

Here, although pre-paid points are required for issuing a booking offer, the required purchase points are equal to or more than the value of the booking offer.

It is possible that the rate of the points is originally set in virtual currency, however, for the time being, the rate is pegged to USD (US dollar). A minimum purchase of 1860 points can be made with USD 20.00. If consumption tax of 10% is taken out as a Japanese corporation, 10% would be further deducted to give 1660 points. However, since consumption tax is exempt in the first two terms, 1860 points would be given. If USD 1.00 = JPY 110, the minimum purchase for a Japan user would be JPY 2200 = 1860 points.

The accumulated points are added at any time, at 1 point = USD 1 cent, to the payment destinations of the user's bank account or wallet services of each country, via the user's paypal or paypay, or if affiliated, visa or master (registered tradename). Basically, the points are converted into cash in a dollar account of a user's paypal (registered trademark), however, it is under consideration that only Japan users can receive Japanese yen via paypay (registered tradename) foremost at start-up of the service. If a user has 20000 points at USD 1.00 = JPY 111, then 22200 JPY would be transferred.

Furthermore, face values are not displayed in relation to disclosed booking messages. It is the platform side's point of view that if face values are described in messages and disclosed by bookers (payers) and casts (consignees), the liability is under the people concerned. A commission of 7% is collected at the time of point purchase.

In step 508, if a booker has the required points for a booking offer, a booking offer can be issued from the booker terminal (step 509).

An example of a booking offer is illustrated in Fig. 7. The booking offer includes items such as the name of a booker, reservation date, reservation time, type of the booking (online booking or offline booking), place (ZOOM), payment (amount): 20000 points, booking details (such as please teach me English), as illustrated in Fig. 7. The booker logs into the booking system from the booker terminal, finds casts by performing a search with preferred (or desired) conditions or by using AI automatic matching, and issues a booking offer as shown in Fig. 7. Before issuing a booking, a confirmation screen is displayed at the booker terminal as illustrated in Fig. 8. Subsequently, when the booker presses the booking button, a booking offer is issued.

The booking system having received this booking offer creates and issues a PPP message such as that mentioned above (step 510) and then sends a booking offer to the relevant cast terminal. The cast terminal having received this booking offer (step 511) decides to approve (consign) or disapprove the booking offer (PPP message) (step 512). If approving (taking the consignment) (step 512), the cast presses the YES button of the confirmation screen at the cast terminal as illustrated in Fig. 11, and thereby approval (consignment) reply is processed (step 513). The booking is thereby established.

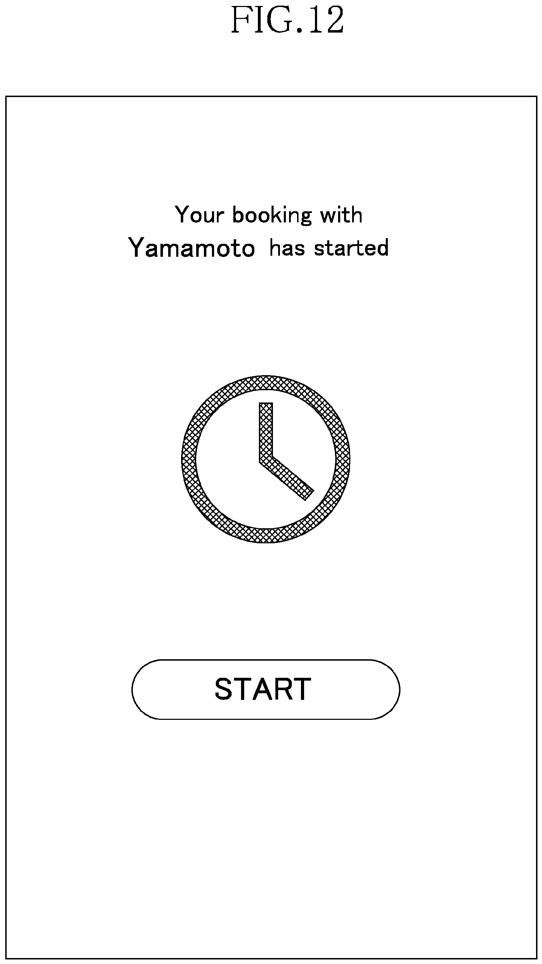

If a booking is established, the booking system moves to the booking time reservation processing (step 514). Booking reservation information is input through the schedule management unit, and the booking time is managed (step 515). At a predetermined time before the booking start time (e.g., five minutes before start time), a starting screen of the booking start is displayed at the booker terminal of the booker as illustrated in Fig. 12. When the booker presses the start button, the booking is on standby, or the booking begins when the start time has passed. At the booking end time, a notification of a completed booking is sent to the booker terminal (step 516).

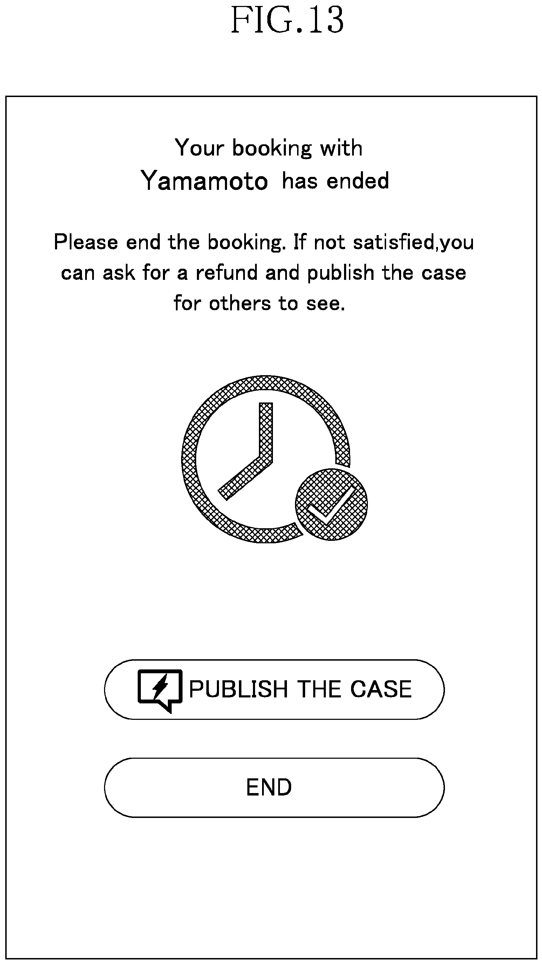

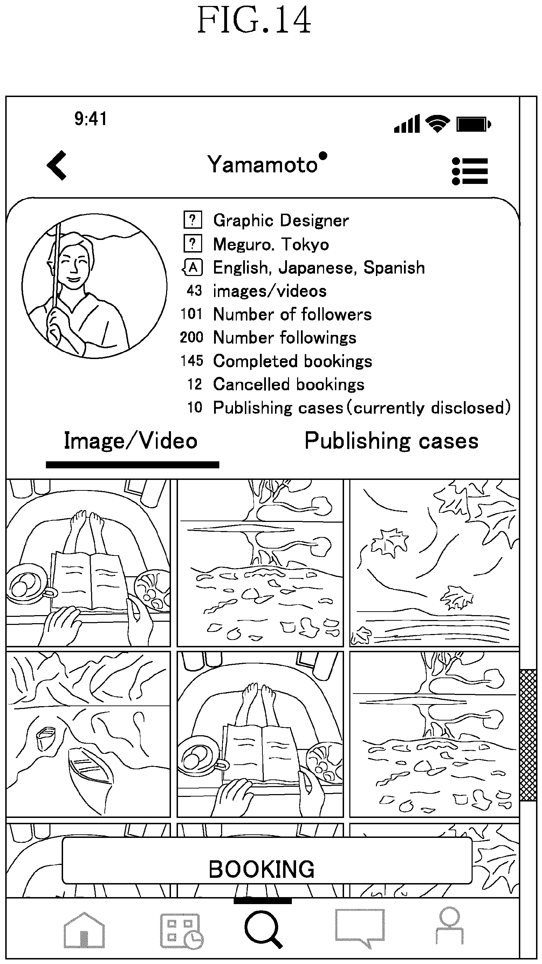

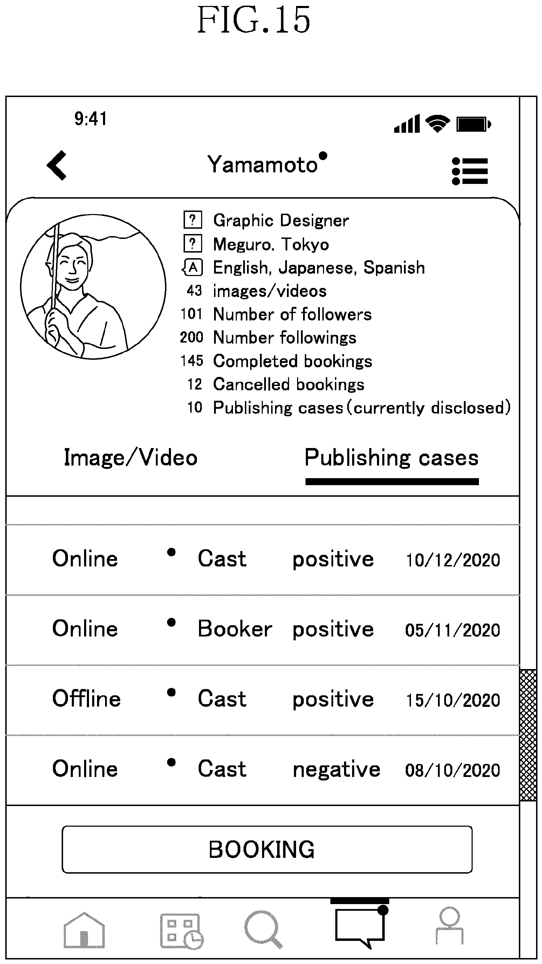

A screen of a completed booking is displayed at the booker terminal which received a notification of a completed booking, as illustrated in Fig. 13. When the booker presses the END button, the booking is completed (step 518). Although the booking is completed, if the work of the cast was not as expected and unsatisfactory, or if the work of the cast was as expected or better (if it was good), the booking details can be disclosed to other users. In that case, a screen as shown in Fig. 13 is displayed at the booker terminal, and the details can be disclosed when the booker presses the PUBLISH THE CASE button. An example of this disclosure is illustrated in Fig. 14 and Fig. 15. Looking at the profile screen of YAMAMOTO in Fig. 14, the number of completed bookings is 145, number of cancelled bookings is 12, and 10 bookings are currently disclosed. Namely, 10 bookings between the booker and the cast were either unsatisfactory or were at the expected value or better. However, if there were unsatisfactory bookings, it is not known which side is at fault, and thus the disclosure can serve as social problem solving. If the booking was at expected value or better, the cast or the booker are evaluated as a social evaluation. The example of Fig. 15 shows positive (expected value or better, good) evaluations and negative (unsatisfactory, not good) evaluations as the evaluations of bookings currently disclosed. In the example shown in Fig. 15, positive evaluations and negative evaluations were counted with those not included in the number of completed bookings, as bookings currently disclosed. However, all instances of completed bookings (number of bookings (minus) number of cancellations) may be counted as the number of completed bookings, where the number of bookings currently disclosed amongst these, and the number of positive evaluations and negative evaluations amongst the bookings currently disclosed, may be counted. Moreover, cancellations may be displayed as a percentage display such as e.g., 0.5%, by adding the number of cancellations to the number of completed bookings, and dividing this by the number of cancellations.

In step 513, if a booking offer is not approved, a decision of whether to ignore this or not is made (step 518), and by ignoring (step 519) or replying to a rejection (step 520), no booking offer is established.

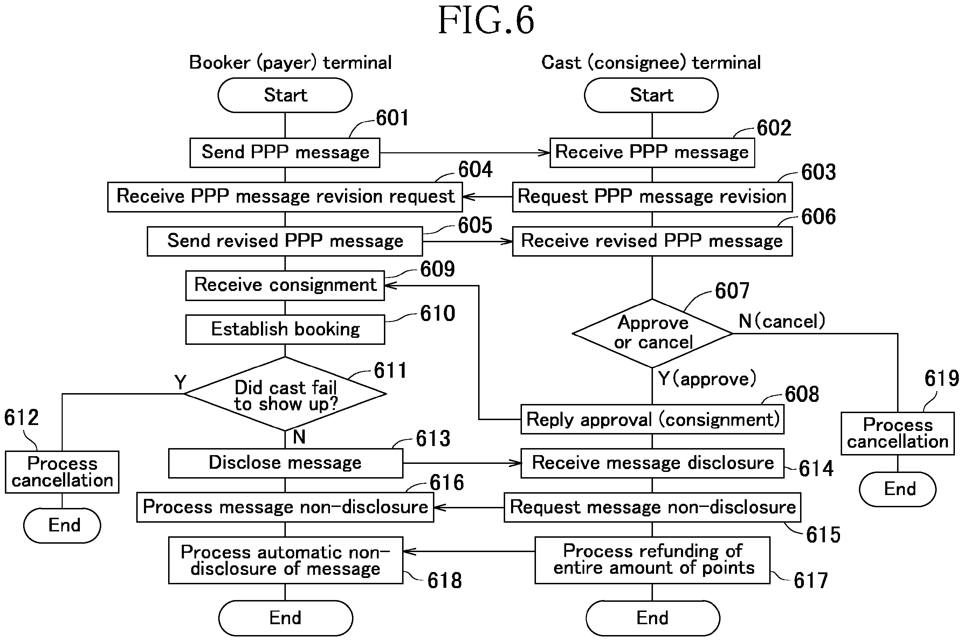

Fig. 6 is a drawing for explaining the control of the alternating message interactions between a booker (payer) terminal and a cast (consignee) terminal, the message disclosure/non-disclosure, and cancellation processing of the present embodiment. The communication between the booker (payer) terminal and cast (consignee) terminal is actually conducted via the booking system; however, the booking system has been omitted for ease of understanding of the message interactions between the booker terminal and the cast terminal.

First, when a booker sends a PPP message through the booker terminal (step 601), a cast receives the PPP message through the cast terminal. The cast having received the PPP message as the booking offer, if the offer does not match the cast schedule, sends a revision request of the PPP message from the cast terminal to the booker terminal (step 603).

When the booker receives the revision request of the PPP message through the booker terminal (step 604), the booker sends a revised PPP message to the cast terminal of the cast (step 605). When the cast terminal receives the revised PPP message (step 606), the cast conducts a decision process of approval or cancellation (step 607). If the cast approves, the cast sends a reply of approval (consignment) through the cast terminal (step 608), the consignment is received at the booker terminal (step 609), and a booking is established (step 610). If the cast failed to show up at the booking start time (step 611), the booker may cancel the booking through the booker terminal (step 612). If the cast shows up and the booking is completed, the booker can disclose the messages through the booker terminal (step 613). When disclosing the messages, the information disclosed in the messages is notified to the cast terminal of the cast, and the cast receives the message disclosure through the cast terminal (step 614). The cast views the information disclosed by the booker and comes to know the booker's dissatisfaction. A non-disclosure request of the message can be made to the low evaluation of the cast or unfavorable message to the cast. (step 615). For example, the cast can send a request to, e.g., not disclose the disclosed information with 300 points refundable to the booker. If the booker accepts the request, message non-disclosure processing can be executed through the booker terminal (step 616). If the booker does not accept the refund request from the cast, non-disclosure processing of the message can be automatically executed (step 618) when the cast refunds the entire amount of points received from the booker (step 617). If no approval is given in step 607, cancellation processing can be executed (step 619).

The processing steps 611 to 619 after the booking establishment in step 610 is not necessarily executed in time sequence, but may be executed by appropriately omitting or reversing the order of the steps.

[Effect of the first embodiment]

In this manner, the present embodiment can provide a new user experience, where a genre-less and highly free matching platform is utilized, even with a user literacy such as using social media, without a complicating system such as selling a variety of skills including conventional freelance matching or encounter-based systems.

Like searching for information without regard to an objective, like a search engine, the present system can search a person's schedule and make booking offers with content which matches that person without regard to genre. A promise is disclosed within a platform, that is, a booking on an hourly wage basis is conducted by securing a user's trust, thereby providing a very low possibility of an illegal booking content to be executed. An operation is enabled with very low cost also in aspects of compliance and system, and an effect is achieved so as to gain an advantage over conventional various matching services in aspects of cost and target market size. Thus, the system according to the embodiment enables to provide the service to better solve the expensive commission fees of the general matching platforms, which currently cause problems to users, such that commission fees are remarkably lowered, or direct transactions are not prohibited.

[Second embodiment]

In the aforementioned embodiment, the control of the alternating message interactions between a booker (payer) terminal and a cast (consignee) terminal in the escrow type schedule booking system was explained in detail. Then, operating examples of a booker (payer) terminal and a cast (consignee) terminal using the characteristic user interface in the series of processes are explained below.

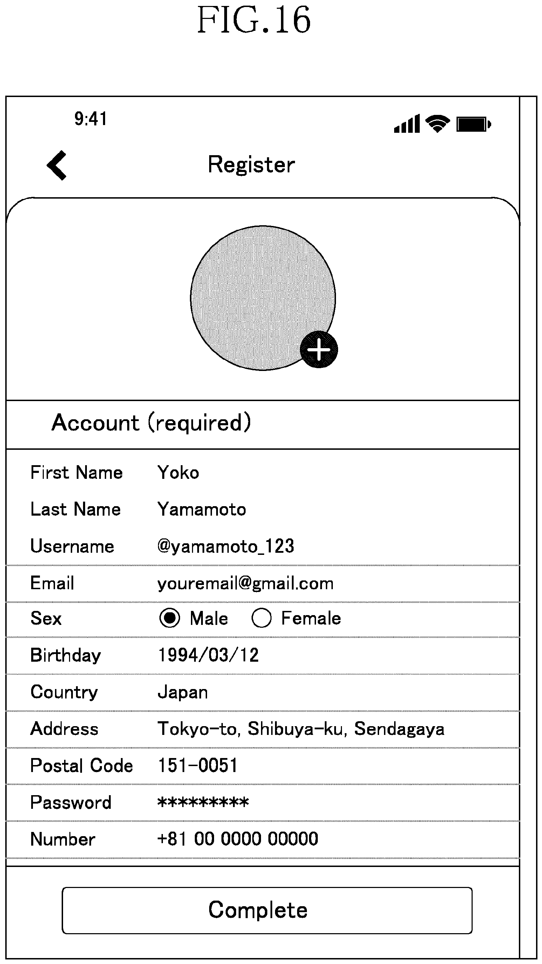

Fig. 16 to Fig. 19 are drawings to explain the user interface displayed between a booker (payer) terminal and a cast (consignee) terminal in the escrow type schedule booking system illustrated in the present embodiment.

Fig. 16 is a drawing illustrating a user interface for the account registration of a user for using the present system.

As illustrated in Fig. 16, in the present system, name information, contact information (e-mail), gender, date of birth, nationality, address, postal code, password, and telephone number are input in the account registration. When pressing the confirmation button (Complete), user registration into the present system is completed.

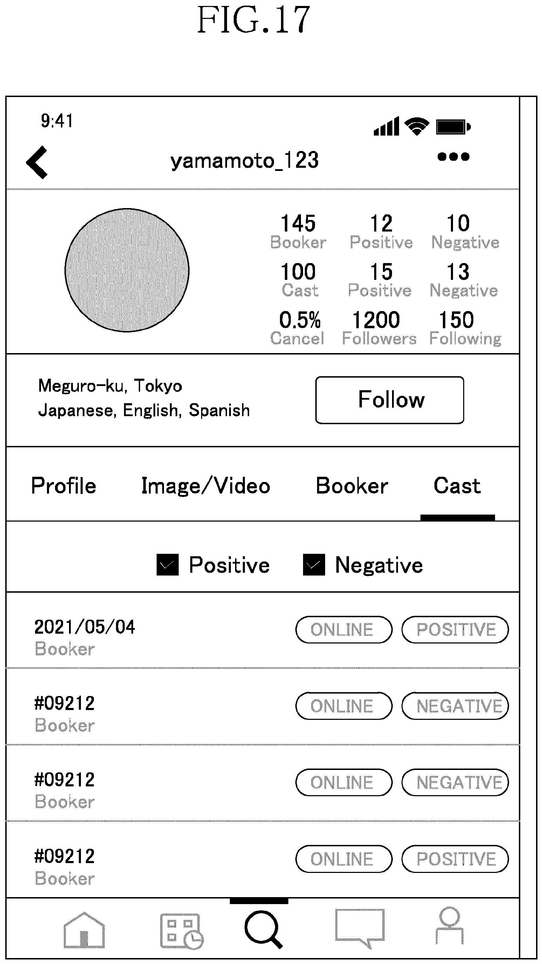

Fig. 17 is a drawing illustrating a user interface which displays the evaluation information of a user of the present system. In the present embodiment, the user interface is configured such that evaluations (Positive/Negative) are disclosed on the profile screen to allow objective determination on how the person of that account has been evaluated by participants.

In Fig. 17, the numerical value "145" corresponding to the Booker indicates the total number of bookings as a booker which were completed or which were made to be non-disclosed after having been disclosed. The number "12" corresponding to Positive in the Booker row indicates the number of bookings which are disclosed to be Positive as a booker; and similarly the numerical value "10" corresponding to Negative in the Booker row indicates the number of bookings which are disclosed to be Negative as a booker.

Moreover, the numerical value "100" corresponding to the Cast indicates the total number of bookings as a cast which were completed or which were made to be non-disclosed after having been disclosed.

The number "15" corresponding to Positive in the Cast row indicates the number of bookings disclosed to be Positive as a cast; and the number "13" corresponding to Negative in the Cast row indicates the number of bookings disclosed to be Negative as a cast.

Moreover, the numerical value "0.5%" corresponding to Cancel is calculated from the total numerical value of cancelled bookings as a cast ÷ the aforementioned 1 to 6.

Thus, in the present embodiment, booking information can be disclosed in more detail compared to that in the user interface screen illustrated in Fig. 14.

Moreover, if a compensated booking request is approved, the system is configured such that the booker cannot cancel the request; and is further configured such that if the cast is late for the request, free cancellation is also possible from that time. Thereby, the system is configured such that the Cancellation rate (%) is calculated by the following formula.

$$\text{Cancellation rate (\%)} = \text{number of cancellations} / \text{number of cast cases}$$

Since the Cancellation rate calculated by the system side is also disclosed on the profile screen of a participant, anybody can decide beforehand whether or not to select a participant as a target for a booking. Accordingly, participants with a bad evaluation will have less opportunities to be booked and will be weeded out as a result, and thus a population of highly evaluated participants is formed in the system as a whole.

The present example corresponds to the evaluation screen of account (yamamoto_123), and the evaluations ((Positive/Negative), booking cancellations (Cancel %), Followers and Followings) are numerically displayed in the history as a booker (payer) or cast (consignee).

The system is configured so that the booker (payer) or the cast (consignee) can refer to the disclosed evaluation information through this screen and decide with certainty, e.g., whether or not to "Follow". The name of the booker (payer) is shown when displayed by a numerical value with the # symbol.

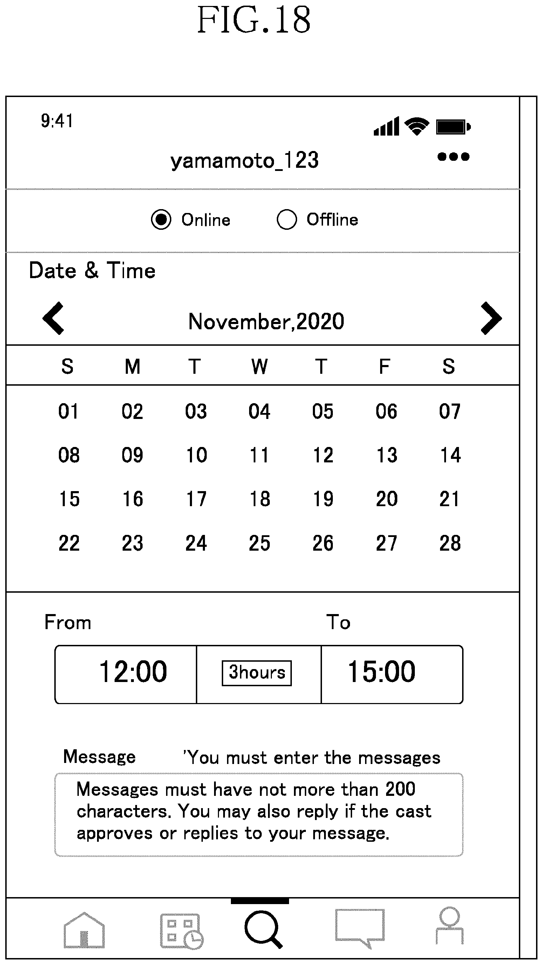

Fig. 18 is a drawing illustrating a user interface in which a booking takes place using the present system.

The present example corresponds to a state in which the booker (payer) checks the schedule of account (yamamoto_123), and inputs information for booking 3 hours from 12:00 to 15:00 on 12 November (year 2020).

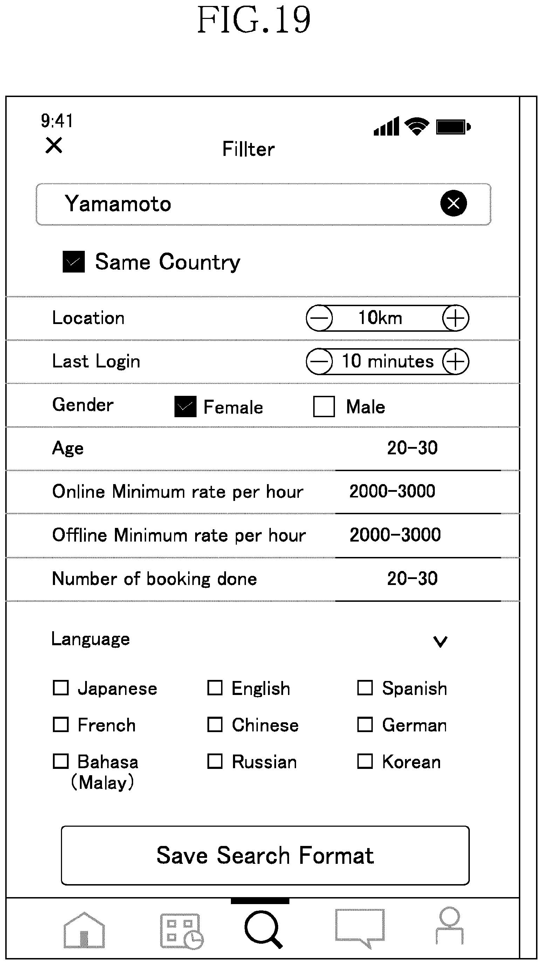

Fig. 19 is a drawing illustrating a user interface for checking a user's booking rate registered in the present system.

In the present example, the booker (payer) can confirm that the account (yamamoto)'s booking rate is $2000 to $3000 per hour, online or offline.

The examples in Fig. 16 to Fig. 19 are to be changed by an upgrade of the operating environment of the user interface in the escrow type schedule booking system illustrated in the present embodiment and continues to be updated at any time by following the evolution of each booking function.

[Effect of the second embodiment]

According to the present embodiment, an effect is achieved of being able to provide a system in which a reserved transaction with payment can be made on one's disposal by booking the time of someone new at any time with freedom of ideas, while referring to disclosed booking evaluations.

In the conventional delivered good or service guarantee-type matching service, both the order issuer and order receiver needed to take the risk to commit to each other until the service is completed or until the good or service is delivered, where a conflict on compensation was caused between the buffer by the order receiver and excessive request by the order issuer, which required too much effort for a case to be completed. In contrast, adopting the configuration of the present embodiment enables a compensated schedule booking type matching service such that someone available is employed for 2 or 3 hour teleworking as a trial; the input from the order issuer and the output from the order receiver are checked; then re-booking is made if favorable to both; and booking is made fifth consecutive day for eight hours a day if there is no problem.

Thereby, effects are achieved such as of decreasing the risk of "paying too much" or "working too much" in conventional online matching, and increasing dramatically the matching accuracy between an order issuer and order receiver.

Moreover, compared to the structure of conventional reviews which were written only at the convenience of the demand side, BookYou according to the present system can provide, by the PPP, more highly transparent and more precise evaluation materials to all registered users, and also other users simply use BookYou, which leading to the contribution to mutually safeguarding or improving the reliability of transactions.

Moreover, the matching service by BookYou utilizing person-to-person job matching structure with natural language usable by anybody in the world, can expand target globally with no limitations.

Furthermore, in the present system, the PPP mentioned above enables users to keep social order in the platform, and also can decrease troubleshooting costs from the service administration side.

In addition, whereas conventional electronic commercial transactions are passive, according to the present system, it can be utilized such that, for example, booking a so-called window shopping (preliminary viewing of products) is conducted in a two-hour video chat with a resident of a foreign country, and if there is a desired product, booking is made for a future two-hour shopping with compensation including shipping fees and product fees.

Thereby, without waiting for products and services to be listed on sites provided by the so-called E-commerce, Amazon (registered tradename) or ebay (registered tradename), the user expresses ideas of the demand side with natural language, employs people on a time charge basis, and thereby can purchase products and services through interactions which could not be done by conventional services.

[Reference Signs List]

| 10 | Booker (payer) terminal |
|---|---|
| 20 | Cast (consignee) terminal |
| 30 | Network |
| 40 | Booking system |
| 41 | Information acquisition unit |
| 42 | User information registration unit |
| 43 | Pre-paid point issuance unit |
| 44 | Pre-paid point transmission unit |
| 45 | Time reservation purchase unit |
| 46 | PPP message creation unit |
| 47 | Consecutive posting prohibition unit |
| 48 | Booking schedule management unit |
| 49 | Booking time notification unit |
| 50 | Reservation time start/end unit |
| 51 | Online booking processing unit |
| 52 | Offline booking processing unit |
| 53 | Disclosure/non-disclosure management unit |
| 54 | AI automatic matching unit |
| 55 | Booking offer issuance unit |

**Claims**

1. A booking system **characterized in that** a booker terminal of a booker included in users, a cast terminal of a cast included in the users, and a booking site for booking can communicate through a network,
   wherein said booking site comprises:

   a request information storage unit that receives and stores service request information for receiving service from the booker terminal;
   a booking processing unit for booking the booker terminal and the cast terminal;
   a contract information storage unit that stores mutual messages from the cast terminal and the booker terminal as booker-cast contract information; and
   a disclosure unit for disclosing the booker-cast contract information which is stored in the contract information storage unit.

2. The booking system according to claim 1, wherein the mutual messages are allowed to be posted only alternatingly.

3. The booking system according to claim 1 or claim 2, wherein a service settlement unit is included for calculating service points to be in a state of provisional payment based on cast information, and for sending the service points to a settlement institution as billing information after completion of the service.

4. The booking system according to any one of claims 1 to 3, wherein a position grasping unit is included for grasping actions and positions by GPS from before-start to finish of a booking when the booking is made offline in the booker terminal and the cast terminal, and the booker terminal and the cast terminal display a photograph icon and send a photographic image from a camera to said booking site by selecting the photograph icon.

5. The booking system according to any one of claims 1 to 4, wherein a search result of the cast terminals is displayed in AI matching order, and the booker terminals and the cast terminals are AI-matched.

6. The booking system according to any one of claims 1 to 5, wherein the booking site calculates information for making decision including which offer is the highest in profitability, at an approval consideration stage, when there are overlapping offers to the cast terminals.

# FIG.1

| | |
|---|---|
| 51 — Online booking processing unit | Information acquisition unit — 41 |
| 52 — Offline booking processing unit | User information registration unit |
| 44 — Pre-paid point transmission unit | Pre-paid point issuance unit — 42 |
| 46 — PPP message creation unit<br>( Time,designated address,<br>compensation,booking details ) | Time reservation purchase unit — 43<br>— 45 |
| | Reservation time start / end unit — 50 |
| 49 — Booking time notification unit | Consecutive posting prohibition unit — 47 |
| 48 — Booking schedule management unit | Disclosure / non-disclosure management unit — 53 |
| 54 — AI automatic matching unit | Booking offer issuance unit — 55 |

User information

Booking offer
approval

Point purchase
information

Booking offer
PPP message

Booking system — 40

EP 4 332 869 A1

# FIG.2

Booker (payer) terminal    Cast (consignee) terminal

10 — [ 10 ]

Booker terminal 1 — 11

Booker terminal 2 — 12

Booker terminal 3 — 13

⋮

Booker terminal n

21 — Cast terminal 1

22 — Cast terminal 2

23 — Cast terminal 3

⋮

Cast terminal n

20 — [ 20 ]

30

40 — Booking system

# FIG.3

Conceptual diagram of booking system

EP 4 332 869 A1

# FIG.4

| Booker (payer) or cast (consignee) |
|:---:|
| Hostess |
| Chef |
| Bartender |
| Lawyer / Patent attorney |
| Fortune teller |
| Physician |
| Engineer |
| Master of ceremonies |
| English teacher |
| Online gamer |
| Teleworker |
| Entertainer (talent) |
| Plumber |

EP 4 332 869 A1

# FIG.5

| Booker (payer) terminal | Booking system | Cast (consignee) terminal |
|---|---|---|

**Booker (payer) terminal**

( Start )

501 Pre-negotiate booking

504 Purchase pre-paid points

508 Receive pre-paid points

509 Issue booking offer

517 Booking completion

( End )

**Booking system**

( Start )

502 Send pre-negotiation booking message

505 Receive purchase request

506 Accept purchase

507 Issue pre-paid points

510 Create/issue PPP message

514 Process booking time reservation

515 Input schedule management unit

516 Notify booking completion

**Cast (consignee) terminal**

( Start )

503 Receive booking pre-negotiation message

511 Receive booking offer PPP message

512 Approve (take consignment)? — N —

513 Y — Reply approval (take consignment)

518 Ignore? — N —

519 Y — Ignore

520 Reply rejection

( End )  ( End )  ( End )

# FIG.6

Booker (payer) terminal　　　　　　　　Cast (consignee) terminal

Start　　　　　　　　　　　　　　　　Start

Send PPP message — 601　　　　　　　Receive PPP message — 602

Receive PPP message revision request — 604 ← Request PPP message revision — 603

Send revised PPP message — 605　→　Receive revised PPP message — 606

Receive consignment — 609　←

Establish booking — 610

Did cast fail to show up? — 611

Approve or cancel — 607　N(cancel) →　Process cancellation — 619 → End

Y(approve) →　Reply approval (consignment) — 608

Y →　Process cancellation — 612 → End

N

Disclose message — 613　→　Receive message disclosure — 614

Process message non-disclosure — 616 ← Request message non-disclosure — 615

Process automatic non-disclosure of message — 618 ← Process refunding of entire amount of points — 617

End　　　　　　　　　　　　　　　　End

EP 4 332 869 A1

# FIG.7

9:41      📶 📶 🔋

**‹ Yamamoto .Cast**
**Online**

Automated booking request form
Name:Yamamoto
Date:23/12/2020
Time:11:00−2h
Booking:Online
Place:Zoom
Payment:20,000.00 💲
Please teach me English casually.

Fixed portion

Hi. i'd like to but it seems too long.
can we change it to 1h?
09:00

All good. thank you let me change
the time of my booking request.
09:01

Booker has changed the time to
11:00 for 1 hour.
09:05

Scrollable portion

Thank you. looking forward for the
booking!
09:10

Cast accepted. a booking is made.
09:11

# FIG.8

9:41        .ıll 🛜 🔋

✕      Yamamoto

❶ Booking – ❷Payment

◉ Online     ◯ Offline

Zoom meeting link

Date & Time

November.2020

| S | M | T | W | T | F | S |
|---|---|---|---|---|---|---|
| 15 | 16 | 17 | 18 | 19 | 20 | 21 |
| 15 | 16 | 17 | 18 | 19• | 20 | 21 |
| 16 | (16) | 17 | 18 | 19 | 20 | 21 |
| 15 | 16 | 17 | 18 | 19 | 20 | 21 |

From             To

**11:00**   2hours   **13:00**

Minimum time is 15 minutes for online booking

Messages      'You must enter the messages

Please post booking details using not more than 200 characters. You may reply if the cast replies to or approves your message.

Total:               ⑤   6

**BOOKING**

# FIG.9

# FIG.10

9:41

Yamamoto•

? Graphic Designer
? Meguro. Tokyo
{A} English, Japanese, Spanish

( View Profile )

**Booker** [ Online ]

**Place** Zoom

https://zoom.us/j/abcdefghijk123456789

**Date & Time**
24/12/2020 [ 2h ] 11h:00–13h:00

**Message**
Please post booking details using not more than 200
characters. You may reply if the cast replies to or
approves your message.

Price 20.000.00 $
Price per hour 6.6000 $

**PENDING** • • •

[ EDIT ] [ CANCEL ]

# FIG.11

9:41

← Tsugehara •  ≡

[?] Graphic Designer
[?] Meguro. Tokyo
[A] English, Japanese, Spanish

( View Profile )

**Cast** [ Online ]

**Place** Zoom

https://zoom.us/j/abcdefghijk123456789

**Date & Time**
24/12/2020  [ 2h ]  11h:00–13h:00

**Message**
One post relating to booking details will have not more than 200 characters.

> Booking details will be created and posted using not more than 200 characters. Details of your posting may be disclosed after the booking is completed.
> Would you like to post your message?
>
> [ YES ]  [ NO ]

[ ACCEPT ]  [ DECLINE ]

# FIG.12

Your booking with
**Yamamoto** has started

START

# FIG.13

Your booking with
**Yamamoto** has ended

Please end the booking. If not satisfied,you
can ask for a refund and publish the case
for others to see.

⚡ PUBLISH THE CASE

END

# FIG.14

# FIG.15

9:41

**Yamamoto**

[?] Graphic Designer
[?] Meguro. Tokyo
[A] English, Japanese, Spanish
43 images/videos
101 Number of followers
200 Number followings
145 Completed bookings
12 Cancelled bookings
10 Publishing cases(currently disclosed)

Image/Video · · · · · · Publishing cases

| Online | Cast | positive | 10/12/2020 |
| Online | Booker | positive | 05/11/2020 |
| Offline | Cast | positive | 15/10/2020 |
| Online | Cast | negative | 08/10/2020 |

BOOKING

# FIG.16

9:41 ⏻

< **Register**

## Account (required)

| | |
|---|---|
| First Name | Yoko |
| Last Name | Yamamoto |
| Username | @yamamoto_123 |
| Email | youremail@gmail.com |
| Sex | ⦿ Male ◯ Female |
| Birthday | 1994/03/12 |
| Country | Japan |
| Address | Tokyo-to, Shibuya-ku, Sendagaya |
| Postal Code | 151-0051 |
| Password | ******** |
| Number | +81 00 0000 00000 |

**Complete**

# FIG.17

9:41

**yamamoto_123** ●●●

| 145 | 12 | 10 |
|-----|-----|-----|
| Booker | Positive | Negative |
| 100 | 15 | 13 |
| Cast | Positive | Negative |
| 0.5% | 1200 | 150 |
| Cancel | Followers | Following |

Meguro-ku, Tokyo
Japanese, English, Spanish

Follow

Profile    Image/Video    Booker    Cast

☑ Positive    ☑ Negative

2021/05/04
Booker
ONLINE    POSITIVE

#09212
Booker
ONLINE    NEGATIVE

#09212
Booker
ONLINE    NEGATIVE

#09212
Booker
ONLINE    POSITIVE

# FIG.18

9:41

## yamamoto_123                    •••

⦿ Online    ◯ Offline

## Date & Time

❮                November,2020                ❯

| S | M | T | W | T | F | S |
|---|---|---|---|---|---|---|
| 01 | 02 | 03 | 04 | 05 | 06 | 07 |
| 08 | 09 | 10 | 11 | 12 | 13 | 14 |
| 15 | 16 | 17 | 18 | 19 | 20 | 21 |
| 22 | 23 | 24 | 25 | 26 | 27 | 28 |

From                               To

| 12:00 | 3hours | 15:00 |
|-------|--------|-------|

Message        'You must enter the messages

Messages must have not more than 200
characters. You may also reply if the cast
approves or replies to your message.

# FIG.19

9:41      ⁄⁄⁄ 📶 🔋

✕      Fillter

Yamamoto      ✕

☑ Same Country

| Location | ⊖ 10km ⊕ |
| Last Login | ⊖ 10 minutes ⊕ |
| Gender | ☑ Female ☐ Male |
| Age | 20-30 |
| Online Minimum rate per hour | 2000-3000 |
| Offline Minimum rate per hour | 2000-3000 |
| Number of booking done | 20-30 |

Language      ∨

☐ Japanese    ☐ English    ☐ Spanish

☐ French    ☐ Chinese    ☐ German

☐ Bahasa (Malay)    ☐ Russian    ☐ Korean

Save Search Format

## INTERNATIONAL SEARCH REPORT

| International application No. |
| --- |
| **PCT/JP2021/026020** |

### A.    CLASSIFICATION OF SUBJECT MATTER

*G06Q 30/08*(2012.01)i
FI:    G06Q30/08

According to International Patent Classification (IPC) or to both national classification and IPC

### B.    FIELDS SEARCHED

Minimum documentation searched (classification system followed by classification symbols)

G06Q30/08

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
| --- | --- | --- |
| X | JP 2015-219555 A (HITACHI LTD) 07 December 2015 (2015-12-07)<br>       paragraph [0003] | 1-4 |
| Y | | 5-6 |
| Y | JP 2005-18274 A (SAINT MEDIA KK) 20 January 2005 (2005-01-20)<br>       paragraph [0164] | 5-6 |

☐ Further documents are listed in the continuation of Box C.       ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 October 2021** | **12 October 2021** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2021/026020**

| Patent document cited in search report | | | Publication date (day/month/year) | Patent family member(s) | Publication date (day/month/year) |
|---|---|---|---|---|---|
| JP | 2015-219555 | A | 07 December 2015 | (Family: none) | |
| JP | 2005-18274 | A | 20 January 2005 | (Family: none) | |

Form PCT/ISA/210 (patent family annex) (January 2015)

**REFERENCES CITED IN THE DESCRIPTION**

**Patent documents cited in the description**

- JP 2020091685 A

- JP 2020091684 A

**Non-patent literature cited in the description**

- *coconala - selling and buying everybody's expertise, a free market of skills,* 05 April 2021, https://cocona-la.com/>